# EUROPEAN PATENT APPLICATION

(11) **EP 4 840 675 A1**
(43) Date of publication of application: **18.11.2026**
(21) Application number: 24919799.7
(22) Date of filing: 15.10.2024
(51) Int. Cl.: B60L 15/00, H02P 29/024, H02P 27/06, H02M 1/08, H02M 1/32, H02M 7/5387

(54) **MOTOR CONTROL UNIT HAVING SHORT-CIRCUIT ISOLATION FUNCTION, POWER ASSEMBLY, AND ELECTRIC VEHICLE**

(30) Priority: 26.01.2024 CN 202410118779
(71) Applicant: Huawei Digital Power Technologies Co., Ltd., Shenzhen, Guangdong 518043 (CN)
(72) Inventor: XU, Yankun, Shenzhen, Guangdong 518043 (CN); PAN, Daming, Shenzhen, Guangdong 518043 (CN)
(74) Representative: Maiwald GmbH
(86) International application number: PCT/CN2024/124993
(87) International publication number: WO 2025/156719

(57) **Abstract**

Embodiments disclosed in this application pertain to the field of new energy vehicles, and in particular, relate to a motor control unit having a fault isolation function, a powertrain, and an electric vehicle. The motor control unit includes an inverter circuit and a control circuit. The inverter circuit includes three-phase bridge arms, where each phase bridge arm includes an upper bridge arm switching transistor and a lower bridge arm switching transistor, and a bridge arm midpoint of each phase bridge arm is configured to connect to one phase winding of a drive motor through a switch module. The control circuit is configured to control the switch module corresponding to each phase bridge arm to be turned on, and control the bridge arm midpoint of each phase bridge arm to output a current to the phase winding of the drive motor. In a process in which the inverter circuit outputs the current, in response to the upper bridge arm switching transistor or the lower bridge arm switching transistor of at least one phase bridge arm being short-circuited, the control circuit controls the switch module corresponding to the at least one phase bridge arm to be turned off. According to this application, after a short-circuit fault occurs in any phase bridge arm in the motor control unit, the drive motor may continue to be controlled to output torque, thereby improving safety of traveling.

## Description

This application claims priority to Chinese Patent Application No. 202410118779.0, filed on January 26, 2024 and entitled "MOTOR CONTROL UNIT HAVING SHORT-CIRCUIT ISOLATION FUNCTION, POWER POWERTRAIN, AND ELECTRIC VEHICLE", which is incorporated herein by reference in its entirety.

### TECHNICAL FIELD

This application relates to the field of new energy vehicles, and in particular, to a motor control unit having a short-circuit isolation function, a powertrain, and an electric vehicle.

### BACKGROUND

A motor control unit (Motor Control Unit, MCU) is a component for controlling a motor in a new energy vehicle. The motor control unit is also connected to a power battery, and can convert a direct current provided by the power battery into an alternating current required for the drive motor to operate.

The motor control unit is usually equipped with an inverter of a three-phase full-bridge topology architecture, so that the direct current can be converted into the alternating current by controlling conduction and cut-off of a switching transistor of each bridge arm in the inverter.

In some special cases (for example, a temperature of the switching transistor is too high), the switching transistor of the bridge arm may be short-circuited. In this case, to avoid damage to the drive motor, the motor control unit needs to be controlled, to enable the drive motor to enter a safety protection state and stop supplying power to the motor. However, this also causes a loss of power of the vehicle, affecting safety of traveling.

### SUMMARY

Embodiments of this application provide a motor control unit having a short-circuit isolation function, a powertrain, and an electric vehicle, to improve safety of traveling of the vehicle. Corresponding technical solutions are as follows.

According to a first aspect, a motor control unit having a fault isolation function is provided. The motor control unit includes an inverter circuit and a control circuit.

The inverter circuit includes three-phase bridge arms, where each phase bridge arm includes an upper bridge arm switching transistor and a lower bridge arm switching transistor, and a bridge arm midpoint of each phase bridge arm is configured to connect to one phase winding of a drive motor through a switch module.

The control circuit is configured to: control the switch module corresponding to each phase bridge arm to be turned on, and control the bridge arm midpoints of the three-phase bridge arms to output a three-phase current to three-phase windings of the drive motor.

In a process in which the inverter circuit outputs the three-phase current, the control circuit responds to the upper bridge arm switching transistor or the lower bridge arm switching transistor of at least one phase bridge arm being short-circuited, and the control circuit is specifically configured to control the switch module corresponding to the at least one phase bridge arm to be turned off.

In the solution shown in this application, when the upper bridge arm switching transistor or the lower bridge arm switching transistor of one phase bridge arm in the three-phase bridge arms is short-circuited, the control circuit may control the switch module between the bridge arm midpoint of the phase bridge arm and the winding of the drive motor to be turned off, so that a short-circuit three-phase current of the phase bridge arm does not flow to the winding of the drive motor, thereby protecting the drive motor. The bridge arm midpoints of the remaining two-phase bridge arms can still normally output a two-phase alternating current to the winding of the drive motor, so that the drive motor operates with a phase missing to avoid a complete loss of power of a vehicle, thereby improving safety of traveling and operating reliability of the vehicle.

In a possible implementation, the motor control unit includes three drive circuits, each drive circuit is configured to drive the upper bridge arm switching transistor and the lower bridge arm switching transistor of one phase bridge arm in the three-phase bridge arms, each drive circuit is configured to receive power supplied by one power supply, and different drive circuits are configured to receive power supplied by different power supplies.

In the solution shown in this application, drive currents of the three-phase bridge arms of the inverter circuit are separately supplied with power from three power supplies. In this way, after any phase bridge arm is short-circuited and consequently the corresponding power supply is short-circuited, the other two power supplies can still normally supply power to the remaining two-phase bridge arms that are not short-circuited. Therefore, the remaining two-phase bridge arms can be normally controlled to provide a two-phase alternating current to the drive motor, thereby ensuring rotation of the drive motor and improving the safety of traveling of the vehicle.

In a possible implementation, in the process in which the inverter circuit outputs the three-phase current, the control circuit responds to the upper bridge arm switching transistor or the lower bridge arm switching transistor of the at least one phase bridge arm being short-circuited, and the control circuit is configured to control the power supply corresponding to the at least one phase bridge arm to stop supplying power.

In the solution shown in this application, after a switching transistor of one phase bridge arm in the inverter circuit is short-circuited, the control circuit exercises control, to stop supplying power to the phase bridge arm, so that a switching transistor that is not short-circuited is cut off, to prevent the switching transistor that is not short-circuited from forming a path with the short-circuited switching transistor when the switching transistor that is not short-circuited is turned on, thereby preventing the drive motor from being short-circuited and improving the safety of traveling of the vehicle.

In a possible implementation, in the process in which the inverter circuit outputs the three-phase current, the control circuit responds to the upper bridge arm switching transistor or the lower bridge arm switching transistor of the at least one phase bridge arm being short-circuited, and the control circuit is configured to output a cut-off signal, where the cut-off signal is used to control the upper bridge arm switching transistor and the lower bridge arm switching transistor of the at least one phase bridge arm to be turned off.

In the solution shown in this application, after a switching transistor of one phase bridge arm in the inverter circuit is short-circuited, the control circuit outputs the cut-off signal to the switching transistors of the phase bridge arm, so that a switching transistor that is not short-circuited is cut off, to prevent the switching transistor that is not short-circuited from forming a path with the short-circuited switching transistor when the switching transistor that is not short-circuited is turned on, thereby preventing the drive motor from being short-circuited and improving the safety of traveling of the vehicle.

In a possible implementation, in the process in which the inverter circuit is configured to output the three-phase current, the control circuit is configured to: first control the upper bridge arm switching transistor or lower bridge arm switching transistor that is not short-circuited in the at least one phase bridge arm to be turned off, and then control the switch module corresponding to the at least one phase bridge arm to be turned off.

In the solution shown in this application, after a switching transistor of one phase bridge arm in the inverter circuit is short-circuited, the control circuit may first cut off a switching transistor that is not short-circuited in the phase bridge arm, to prevent the drive motor from being short-circuited because both the upper bridge arm switching transistor and the lower bridge arm switching transistor of the phase bridge arm are turned on. Then the switch module corresponding to the at least one phase bridge arm is controlled to be turned off, to prevent a short-circuit three-phase current of the phase bridge arm from flowing to the winding of the drive motor, thereby protecting the drive motor.

In a possible implementation, in the process in which the inverter circuit is configured to output the three-phase current, the control circuit responds to a current that passes through the upper bridge arm switching transistor or the lower bridge arm switching transistor of at least one phase bridge arm in the three-phase bridge arms being greater than a current threshold, and the control circuit is specifically configured to control the switch module corresponding to the at least one phase bridge arm to be turned off.

In the solution shown in this application, after it is detected that a three-phase current of the upper bridge arm switching transistor or the lower bridge arm switching transistor of the at least one phase bridge arm is greater than the current threshold, the control circuit may determine that the three-phase current of the upper bridge arm switching transistor or the lower bridge arm switching transistor of the at least one phase bridge arm is short-circuited, and then control the switch module corresponding to the at least one phase bridge arm to be turned off, to prevent the short-circuit three-phase current of the phase bridge arm from flowing to the winding of the drive motor, thereby protecting the drive motor.

In a possible implementation, in the process in which the inverter circuit outputs the three-phase current, the control circuit responds to a current that passes through the upper bridge arm switching transistor or the lower bridge arm switching transistor of at least one phase bridge arm being greater than a current threshold, and the control circuit is specifically configured to control the inverter circuit to be in a safety protection state.

The control circuit responds to the control circuit controlling the inverter circuit to be in the safety protection state for preset duration, and the control circuit is specifically configured to control the upper bridge arm switching transistors and the lower bridge arm switching transistors of the three-phase bridge arms to be both turned off.

The control circuit responds to the current that passes through the upper bridge arm switching transistor or the lower bridge arm switching transistor of the at least one phase bridge arm being greater than zero, and the control circuit is specifically configured to control the switch module corresponding to the at least one phase bridge arm to be turned off.

The safety protection state includes an active short circuit ASC state or a switching pulse off SPO state.

In the solution shown in this application, after it is determined that the current of the upper bridge arm switching transistor or the lower bridge arm switching transistor of the at least one phase bridge arm is greater than the current threshold, the control circuit may further verify whether the upper bridge arm switching transistor or the lower bridge arm switching transistor of the at least one phase bridge arm is short-circuited. Before verification, the drive motor is controlled to be in the safety protection state for the preset duration, to reduce a counter electromotive force to be generated by the drive motor, thereby protecting components in the inverter circuit. After the upper bridge arm switching transistors and the lower bridge arm switching transistors in the three-phase bridge arms are cut off, if a three-phase current at the middle point of at least one phase bridge arm is greater than zero or greater than the current threshold, it may be determined that the upper bridge arm switching transistor or the lower bridge arm switching transistor of the at least one phase bridge arm is short-circuited. Then the switch module corresponding to the at least one phase bridge arm may be turned off, to prevent a short-circuit three-phase current of the phase bridge arm from flowing to the winding of the drive motor, thereby protecting the drive motor.

The safety protection state includes an active short circuit ASC (Active Short Circuit, ASC) state and a switching pulse off SPO (Switching Pulse Off, SPO) state. The active short circuit ASC state means that, in the three-phase bridge arms, the upper bridge arm switching transistors or the lower bridge arm switching transistors of the phase bridge arms are all turned on, where the three-phase windings of the drive motor and the three upper bridge arm switching transistors in an on state form a closed loop, or the three lower bridge arm switching transistors in an on state and the three-phase windings form a closed loop. The motor control unit enters the active short circuit protection ASC state, so that the motor control unit, the drive motor, and a power battery are isolated, to ensure high-voltage safety of the entire vehicle. In addition, the drive motor can generate reverse torque for slow braking of the vehicle. Furthermore, the motor control unit entering the active short circuit ASC state can prevent the drive motor from generating an excessively high counter electromotive force that could damage the power battery, a bus capacitor, and other components.

The switching pulse off SPO state means that the upper bridge arm switching transistor and the lower bridge arm switching transistor of each phase bridge arm in the three-phase bridge arms are both turned off, so that the motor control unit, the drive motor, and the power battery are isolated.

In a possible implementation, in the process in which the inverter circuit outputs the three-phase current, the control circuit is specifically configured to: in response to a current that passes through the upper bridge arm switching transistor or the lower bridge arm switching transistor of at least one phase bridge arm in the three-phase bridge arms being greater than the current threshold and a rotational speed of the drive motor being greater than a preset rotational speed, control the drive motor to be in the safety protection state.

In the solution shown in this application, before the control circuit verifies again whether the upper bridge arm switching transistor or the lower bridge arm switching transistor of the at least one phase bridge arm is short-circuited, if the rotational speed of the drive motor is greater than the preset rotational speed, the inverter circuit needs to be controlled to be in the safety protection state, to reduce the counter electromotive force to be generated by the drive motor, thereby protecting components in the inverter circuit.

In a possible implementation, the motor control unit is configured to receive a torque signal and control the drive motor to output torque indicated by the torque signal, and in the process in which the inverter circuit outputs the three-phase current, the control circuit is specifically configured to: in response to the upper bridge arm switching transistor or the lower bridge arm switching transistor of one phase bridge arm in the three-phase bridge arms being short-circuited, control the switch module corresponding to the at least one phase bridge arm to be turned off; and in response to the switch module corresponding to the phase bridge arm being turned off, control the bridge arm midpoints of the other two-phase bridge arms to output a two-phase alternating current, where the two-phase alternating current is used to drive the drive motor to output torque, and an average value of the torque output by the drive motor driven by the two-phase alternating current is less than a torque value indicated by the torque signal.

In the solution shown in this application, the control circuit may control the remaining two-phase bridge arms that do not have a short circuit fault to output the two-phase alternating current to the winding of the drive motor. The output two-phase alternating current may drive the drive motor of the vehicle to output the torque, ensuring that the vehicle does not have a loss of power. However, as the drive motor that drives the vehicle changes from the three-phase alternating current to the two-phase alternating current, a phase winding of the drive motor cannot normally generate torque. Therefore, after the short-circuit fault occurs in the bridge arm of the motor control unit, the average value of the torque output by the drive motor driven by the motor control unit may be less than the torque value indicated by the torque signal.

In a possible implementation, in a process in which the inverter circuit is configured to output the two-phase alternating current, the motor control unit is configured to: control the rotational speed of the drive motor to be less than a preset rotational speed value.

In the solution shown in this application, to improve safety of driving, by the motor control unit, the drive motor of the vehicle to output the torque through the two-phase alternating current, the rotational speed may be controlled to be less than the preset rotational speed value. The preset rotational speed value may be set by a technician based on performance of the drive motor. When the rotational speed of the drive motor is less than the preset rotational speed value, the drive motor can be safely driven by the two-phase alternating current to output the torque to the vehicle.

In a possible implementation, in a process in which the inverter circuit outputs the two-phase alternating current, the control circuit responds to the upper bridge arm switching transistor or the lower bridge arm switching transistor of either bridge arm in the two-phase bridge arms being short-circuited, and the control circuit is configured to control the drive motor to enter a safety protection state.

In the solution shown in this application, in the process in which the inverter circuit outputs the two-phase alternating current to the drive motor, if a short-circuit fault occurs again in the two-phase bridge arms that output the two-phase alternating current, the drive motor may be controlled to enter the safety protection state, thereby ensuring the safety of traveling.

In a possible implementation, in a process in which the inverter circuit outputs the two-phase alternating current, the control circuit is configured to: in response to a three-phase current that passes through the upper bridge arm switching transistor or the lower bridge arm switching transistor of one phase bridge arm in the two-phase bridge arms being greater than a current threshold, control the switch module corresponding to the phase bridge arm in the two-phase bridge arms to be turned off.

In the solution shown in this application, in the process in which the inverter circuit outputs the two-phase alternating current to the drive motor, if a short-circuit fault occurs again in one phase bridge arm in the two-phase bridge arms that output the two-phase alternating current, the switch module connected to the bridge arm with the short-circuit fault may be controlled to be turned off, so that a short-circuit three-phase current of the phase bridge arm does not flow to the winding of the drive motor, thereby protecting the drive motor.

According to a second aspect, a powertrain is provided. The powertrain includes a drive motor and the motor control unit according to the first aspect and/or any possible implementation of the first aspect. The motor control unit is configured to receive a torque signal and control the drive motor to output torque indicated by the torque signal.

In a possible implementation, the powertrain includes a resolver sensor and a current sensor, the resolver sensor is configured to detect a rotational speed of the drive motor, the current sensor is configured to detect a three-phase current value of the drive motor, the motor control unit is configured to receive a rotational speed signal from the resolver sensor and a three-phase current signal from the current sensor, the rotational speed signal indicates the rotational speed of the drive motor, and the three-phase current signal indicates the three-phase current value of the drive motor.

Beneficial effects of the powertrain according to the second aspect of this application are the same as the described beneficial effects of the motor control unit according to the first aspect of this application. Details are not described herein.

According to a third aspect, an electric vehicle is provided. The electric vehicle includes the powertrain according to the second aspect, a vehicle control unit, and a power battery. The power battery is configured to supply power to the powertrain, and the vehicle control unit is configured to send a torque signal to the motor control unit.

Beneficial effects of the electric vehicle according to the third aspect of this application are the same as the described beneficial effects of the motor control unit according to the first aspect of this application. Details are not described herein.

### BRIEF DESCRIPTION OF DRAWINGS

FIG. 1 is a diagram of a structure of a motor control unit according to an embodiment of this application;
FIG. 2 is a diagram of a structure of a motor control unit according to an embodiment of this application;
FIG. 3 is a diagram of a structure of a motor control unit according to an embodiment of this application;
FIG. 4 is a diagram of a structure of a powertrain according to an embodiment of this application; and
FIG. 5 is a diagram of a structure of an electric vehicle according to an embodiment of this application.

### DESCRIPTION OF EMBODIMENTS

To make the objectives, technical solutions, and advantages of this application clearer, the following further describes the implementations of this application in detail with reference to the accompanying drawings.

A motor control unit (Motor Control Unit, MCU) is a component for controlling a drive motor in a new energy vehicle. The motor control unit is also connected to a power battery, and can convert a direct current provided by the power battery into an alternating current required for the drive motor to operate. The motor control unit is usually equipped with an inverter of a three-phase full-bridge topology architecture, so that the direct current can be converted into the alternating current by controlling conduction and cut-off of a switching transistor of each bridge arm in the inverter.

In some special cases (for example, a temperature of the switching transistor is too high), the switching transistor of the bridge arm may be short-circuited. In this case, to avoid damage to the drive motor, the motor control unit needs to be controlled, to enable the drive motor to immediately enter a safety protection state and stop supplying power to the motor. However, this also causes a loss of power of the vehicle, affecting safety of traveling.

An embodiment of this application provides a motor control unit having a fault isolation function. After a switching transistor of any phase bridge arm in an inverter is short-circuited, the phase bridge arm may be disconnected to not output an alternating current to a winding of a drive motor, and a two-phase alternating current may be output to the winding of the drive motor through the remaining two-phase bridge arms, to drive the motor to rotate. In this way, after a switching transistor of any phase bridge arm in the inverter is short-circuited, a vehicle does not have a loss of power, thereby ensuring safety of traveling of the vehicle.

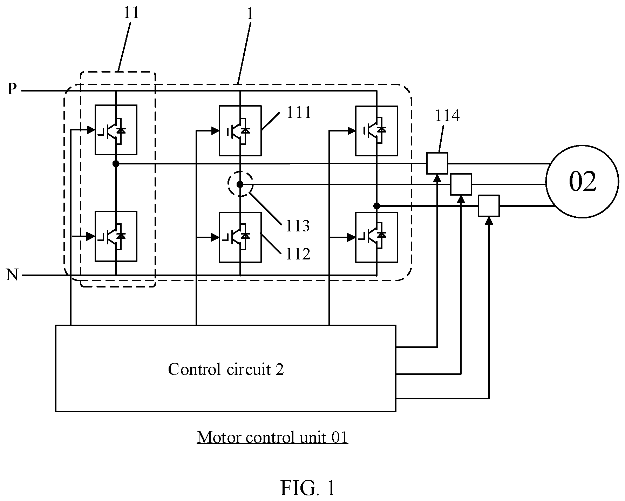

FIG. 1 is a diagram of a structure of a motor control unit 01 having a fault isolation function according to an embodiment of this application. As shown in FIG. 1, the motor control unit 01 includes an inverter circuit 1 and a control circuit 2.

The inverter circuit 1 includes three-phase bridge arms 11, where each phase bridge arm 11 includes an upper bridge arm switching transistor 111 and a lower bridge arm switching transistor 112, and a bridge arm midpoint 113 of each phase bridge arm 11 is configured to connect to one phase winding of a drive motor 02 through a switch module 114. Control ends of the upper bridge arm switching transistor 111, the lower bridge arm switching transistor 112, and the switch module 114 of each phase bridge arm 11 may be electrically connected to the control circuit 2. The control circuit 2 may control conduction and cut-off of each upper bridge arm switching transistor 111 and each lower bridge arm switching transistor 112, and turning-on and turning-off of each switch module 114.

When the motor control unit 01 operates normally, that is, in a case in which no switching transistor is short-circuited in the inverter circuit 1, the control circuit 2 is configured to control the switch module 114 corresponding to each phase bridge arm 11 to be turned on, and control the bridge arm midpoints 113 of the three-phase bridge arms 11 to output a three-phase current to three-phase windings of the drive motor 02, so that the drive motor 02 rotates normally.

In a process in which the inverter circuit 1 normally outputs the three-phase current to the drive motor 02, the control circuit 2 is specifically configured to: in response to the upper bridge arm switching transistor 111 or the lower bridge arm switching transistor 112 of at least one phase bridge arm 11 in the three-phase bridge arms 11 being short-circuited, control the switch module 114 corresponding to the at least one phase bridge arm 11 to be turned off.

In this way, when the upper bridge arm switching transistor 111 or the lower bridge arm switching transistor 112 of one phase bridge arm 11 in the three-phase bridge arms 11 is short-circuited, the control circuit 2 may control the switch module 114 between the bridge arm midpoint 113 of the phase bridge arm 11 and the drive motor 02 to be turned off, so that a short-circuit current of the phase bridge arm 11 does not flow to the winding of the drive motor 02, thereby protecting the drive motor 02. The bridge arm midpoints 113 of the remaining two-phase bridge arms 11 can continue to output a two-phase alternating current to the winding of the drive motor 02, so that the drive motor 02 operates with a phase missing to avoid a complete loss of power of the vehicle equipped with the motor control unit 01, thereby improving safety of traveling of the vehicle.

In the motor control unit 01 shown in this application, the upper bridge arm switching transistor 111, the lower bridge arm switching transistor 112, and the switch module 114 may be semiconductor devices, for example, may be insulated gate bipolar transistors (Insulate-Gate Bipolar Transistors, IGBTs) or silicon carbide (SiC). Each phase bridge arm 11 may be divided by the bridge arm midpoint 113 into an upper bridge arm and a lower bridge arm. The upper bridge arm and the lower bridge arm both include a power module. The power module located on the upper bridge arm includes the upper bridge arm switching transistor 111. The power module located on the lower bridge arm includes the lower bridge arm switching transistor 112. The power module may further include a detection module (not shown in FIG. 1), for example, a temperature detection module or a short-circuit detection module, in addition to the upper bridge arm switching transistor 111 and the lower bridge arm switching transistor 112.

The short-circuit detection module in each power module may be connected in series to the upper bridge arm switching transistor 111 or the lower bridge arm switching transistor 112 of the same power module, and can detect a current value of a current that passes through the upper bridge arm switching transistor 111 or the lower bridge arm switching transistor 112. When detecting that the current that passes through the upper bridge arm switching transistor 111 or the lower bridge arm switching transistor 112 is greater than a specified current threshold, the short-circuit detection module may send a fault signal to the control circuit.

In an example, in response to a current that passes through the upper bridge arm switching transistor 111 or the lower bridge arm switching transistor 112 of at least one phase bridge arm 11 in the three-phase bridge arms 11 being greater than the current threshold, the control circuit 1 controls the switch module 114 corresponding to the at least one phase bridge arm 11 to be turned off. In other words, after receiving the fault signal sent by the short-circuit detection module in any power module, the control circuit 1 may determine that a switching transistor in the any power module is short-circuited, and then may control the switch module 114 connected to the bridge arm 11 in which the any power module is located to be turned off, so that the bridge arm midpoints of the remaining two-phase bridge arms 11 continue to output a two-phase alternating current to the winding of the drive motor 02.

In an example, in the process in which the three-phase bridge arms 11 of the inverter circuit 1 normally output the three-phase current to the drive circuit, if the upper bridge arm switching transistor 111 or the lower bridge arm switching transistor 112 of at least one phase bridge arm 11 in the three-phase bridge arms 11 is short-circuited, the control circuit 2 is configured to: first control the upper bridge arm switching transistor 111 or lower bridge arm switching transistor 112 that is not short-circuited in the at least one phase bridge arm 11 to be turned off, and then control the switch module 114 corresponding to the at least one phase bridge arm 11 to be turned off.

During implementation, after a switching transistor of one phase bridge arm 11 in the inverter circuit 1 is short-circuited, the control circuit 2 may first cut off a switching transistor that is not short-circuited in the phase bridge arm 11, to prevent the upper bridge arm switching transistor and the lower bridge arm switching transistor of the phase bridge arm 11 from being both turned on and avoid a case in which all direct currents of the input inverter circuit 1 flow through the phase bridge arm 11, thereby avoiding a loss of power of the drive motor 02. After the switching transistor that is not short-circuited in the phase bridge arm 11 is cut off, the control circuit 2 may further control the switch module corresponding to the at least one phase bridge arm to be turned off, to prevent a short-circuit current of the phase bridge arm from flowing to the winding of the drive motor 02, thereby protecting the drive motor 02.

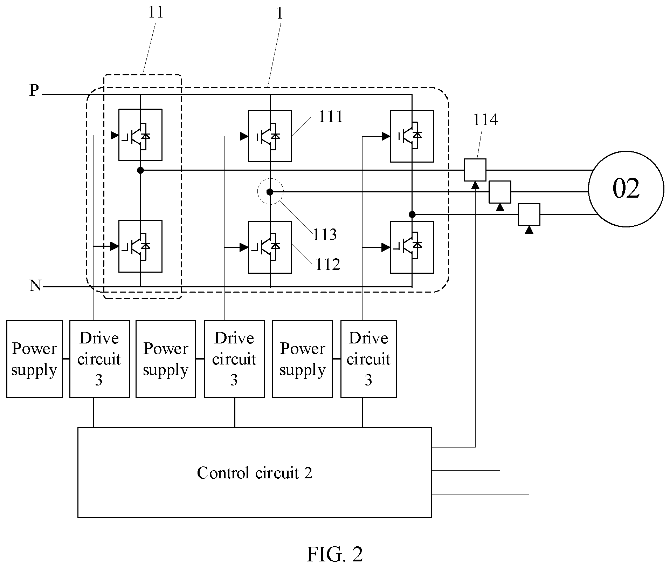

FIG. 2 is a diagram of a structure of a motor control unit 01 having a fault isolation function according to an embodiment of this application. As shown in FIG. 2, the motor control unit 01 includes three power supplies. The upper bridge arm switching transistors 111 and the lower bridge arm switching transistors 112 included in the three-phase bridge arms 11 of the inverter circuit 1 may be respectively driven by three drive circuits 3, where the three drive circuits 3 may be respectively supplied with power from three power supplies. The three power supplies may be three mutually independent power supplies, or may be three power supplies implemented through an isolated power supply.

Each drive circuit 3 may be electrically connected to the two power modules on one bridge arm 11, and may be configured to drive the upper bridge arm switching transistor 111 and the lower bridge arm switching transistor 112 that are included in the power modules, that is, to provide a voltage difference required for conduction of the switching transistors in the power modules. In addition, the drive circuit 3 may further be electrically connected to the detection module in the corresponding power module, and may be configured to receive a signal sent by the detection module, for example, receive a detection signal sampled by the temperature detection module, or receive a fault signal sent by the short-circuit detection module. Power supply for each drive circuit 3 is independent of each other. For example, each drive circuit 3 may be supplied with power in an isolated manner through an isolated power supply. To be specific, after one drive circuit 3 in the motor control unit 01 becomes abnormal (for example, is short-circuited), driving and control of the switching transistors on the other phase bridge arms 11 by the other drive circuits 3 are not affected.

In the motor control unit 01 shown in FIG. 2, because the upper bridge arm switching transistor 111 and the lower bridge arm switching transistor 112 of one phase bridge arm receive power supplied by one power supply, after the upper bridge arm switching transistor 111 or the lower bridge arm switching transistor 112 in one phase bridge arm is short-circuited, the short-circuited switching transistor may short-circuit the power supply that supplies power to the short-circuited switching transistor. After being short-circuited, the power supply cannot normally supply power to the corresponding drive circuit 3. As a result, the drive circuit cannot drive the other switching transistor that is not short-circuited to be turned on. In other words, after the upper bridge arm switching transistor 111 or the lower bridge arm switching transistor 112 of one phase bridge arm is short-circuited, the other lower bridge arm switching transistor 112 or upper bridge arm switching transistor 111 that is not short-circuited may enter a cut-off state, to prevent a direct current input into the input inverter circuit 1 from directly flowing through the phase bridge arm 11, thereby avoiding a loss of power supply for the drive motor 02.

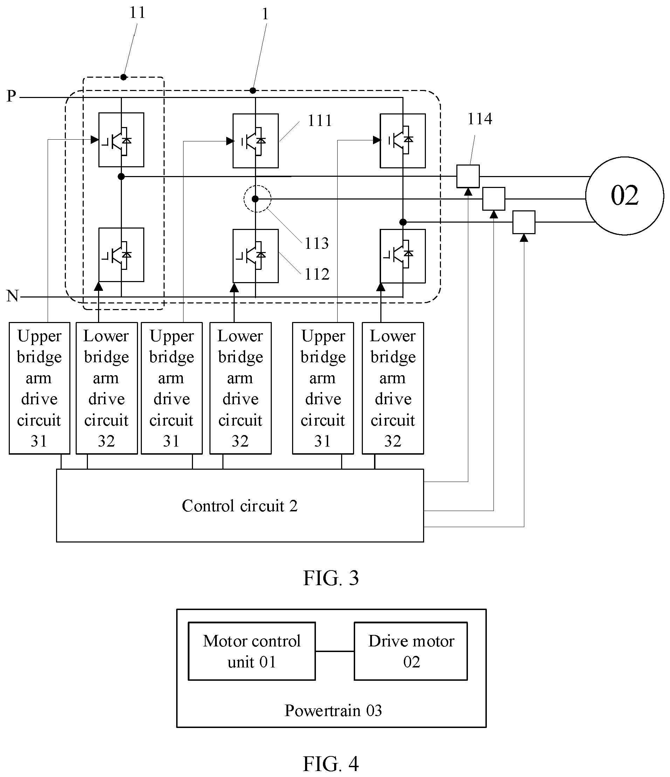

FIG. 3 is a diagram of a structure of a motor control unit 01 having a fault isolation function according to an embodiment of this application. As shown in FIG. 3, the upper bridge arm switching transistor 111 included in each phase bridge arm 11 of the inverter circuit 1 may be driven by an upper bridge arm drive circuit 31, and the lower bridge arm switching transistor 112 included in each phase bridge arm 11 may be driven by a lower bridge arm drive circuit 32. The six drive circuits may be respectively supplied with power from six power supplies (not shown in FIG. 3). The six power supplies may be six mutually independent power supplies, or may be six power supplies implemented through an isolated power supply.

In the motor control unit 01 shown in FIG. 3, because the upper bridge arm switching transistor 111 and the lower bridge arm switching transistor 112 of each phase bridge arm respectively receive power supplied by one power supply, after the upper bridge arm switching transistor 111 or the lower bridge arm switching transistor 112 in one phase bridge arm is short-circuited, the short-circuited switching transistor does not affect driving and control of a switching transistor that is not short-circuited in the same phase bridge arm 11.

Therefore, processing through which the control circuit 2 controls the switching transistor that is not short-circuited in the bridge arm 11 with a short-circuit fault to be turned off may include: in response to the upper bridge arm switching transistor 111 or the lower bridge arm switching transistor 112 of the at least one phase bridge arm 11 being short-circuited, the control circuit 2 outputs a cut-off signal to the upper bridge arm drive circuit 31 and the lower bridge arm drive circuit 32 respectively corresponding to the upper bridge arm switching transistor 111 and the lower bridge arm switching transistor 112 of the phase bridge arm. After receiving the cut-off signal, the upper bridge arm drive circuit 31 and the lower bridge arm drive circuit 32 may drive the corresponding upper bridge arm switching transistor 111 and lower bridge arm switching transistor 112 to be turned off. The upper bridge arm switching transistor 111 and the lower bridge arm switching transistor 112 are cut off. There is one short-circuited switching transistor which cannot be normally cut off. Therefore, the switching transistor that is not short-circuited can be turned off.

In a possible implementation, for the motor control unit 01 shown in FIG. 2 and FIG. 3, processing through which the control circuit 2 controls the switching transistor that is not short-circuited in the bridge arm 11 with a short-circuit fault to be turned off may include: in response to the upper bridge arm switching transistor 111 or the lower bridge arm switching transistor 112 of the at least one phase bridge arm 11 being short-circuited, the control circuit 2 controls the power supply corresponding to the at least one phase bridge arm 11 to stop supplying power. To be specific, after receiving a fault signal sent by the short-circuit detection module in one phase bridge arm 11, the control circuit 2 may control each power supply of the phase bridge arm 11 to stop supplying power to the drive circuit 3 (or the upper bridge arm drive circuit 31 and the lower bridge arm drive circuit 32) corresponding to the phase bridge arm 11, to control the upper bridge arm switching transistor 111 or lower bridge arm switching transistor 112 that is not short-circuited in the phase bridge arm 11 to be turned off.

To improve accuracy of short-circuit detection for the switching transistors in the bridge arm 11, an embodiment of this application further provides a method for determining an exception of the bridge arm, including the following steps.

Step S1: In response to a current that passes through the upper bridge arm switching transistor 111 or the lower bridge arm switching transistor 112 of at least one phase bridge arm 11 in the three-phase bridge arms 11 being greater than a current threshold, the control circuit 2 controls the drive motor 02 to enter a safety protection state.

When the current of the upper bridge arm switching transistor 111 or the lower bridge arm switching transistor 112 of the at least one phase bridge arm 11 in the three-phase bridge arms 11 is greater than the current threshold, the short-circuit detection module in the corresponding power module may be triggered to send a fault signal to the control circuit 2. To avoid a case in which the fault signal is a false alarm and improve accuracy of determining, by the control circuit 2, that a short-circuit fault occurs in the at least one phase bridge arm 11, the control circuit 2 may verify again whether the inverter circuit 1 is short-circuited. To be specific, the upper bridge arm switching transistor 111 or the lower bridge arm switching transistor 112 of each phase bridge arm 11 in the inverter circuit 1 may be turned off. If the upper bridge arm switching transistor 111 or the lower bridge arm switching transistor 112 of one phase bridge arm 11 is short-circuited, a current flowing through the bridge arm midpoint 113 of the phase bridge arm 11 may be detected, or a current greater than the current threshold may be detected.

When a rotational speed of the drive motor 02 is high, the drive motor 02 generates a counter electromotive force greater than an input voltage corresponding to the inverter circuit 1. If each switching transistor in the inverter circuit 1 is directly cut off in this case, the counter electromotive force generated by the drive motor 02 is applied to the inverter circuit 1. As a result, some components of the motor control unit 01 could be damaged. Therefore, before each switching transistor in the inverter circuit 1 is cut off, the control circuit 2 first controls states of the phase bridge arms 11 in the inverter circuit 1, so that the drive motor 02 enters the safety protection state. After the rotational speed of the drive motor 02 decreases so that the counter electromotive force generated by the drive motor 02 is less than the input voltage corresponding to the inverter circuit 1, the control circuit 2 may cut off each switching transistor in the inverter circuit 1.

Processing through which the control circuit 2 controls the drive motor 02 to enter the safety protection state may include the following cases.

In a case, after the control circuit 2 receives a fault signal corresponding to the upper bridge arm switching transistor 111 in any bridge arm 11, the control circuit 2 may control the upper bridge arm switching transistor 111 of each phase bridge arm 11 to be turned on, and control the lower bridge arm switching transistor 112 of each phase bridge arm 11 to be turned off, so that the drive motor 02 enters the safety protection state. In the safety protection state, the drive motor 02 may release the generated counter electromotive force through the upper bridge arm in each phase bridge arm 11.

In another case, after the control circuit 2 receives a fault signal corresponding to the lower bridge arm switching transistor 112 in any bridge arm 11, the control circuit 2 may control the lower bridge arm switching transistor 111 of each phase bridge arm 11 to be turned on, and control the upper bridge arm switching transistor 111 of each phase bridge arm 11 to be turned off, so that the drive motor 02 enters the safety protection state. In the safety protection state, the drive motor 02 may release the generated counter electromotive force through the lower bridge arm in each phase bridge arm 11.

The safety protection state includes an active short circuit ASC (Active Short Circuit, ASC) state and a switching pulse off SPO (Switching Pulse Off, SPO) state. The active short circuit ASC state means that, in the three-phase bridge arms 11, the upper bridge arm switching transistors or the lower bridge arm switching transistors of the phase bridge arms are all turned on, where the three-phase windings of the drive motor 02 and the three upper bridge arm switching transistors in an on state form a closed loop, or the three lower bridge arm switching transistors in an on state and the three-phase windings form a closed loop. The motor control unit 011 enters the active short circuit protection ASC state, so that the motor control unit 01, the drive motor 02, and a power battery 04 are isolated, to ensure high-voltage safety of the entire vehicle. In addition, the drive motor 02 can generate reverse torque for slow braking of the vehicle. Furthermore, the motor control unit 01 entering the active short circuit ASC state can prevent the drive motor 02 from generating an excessively high counter electromotive force that could damage the power battery 04, a bus capacitor, and other components.

The switching pulse off SPO state means that the upper bridge arm switching transistor and the lower bridge arm switching transistor of each phase bridge arm in the three-phase bridge arms 11 are both turned off, so that the motor control unit 01, the drive motor 02, and the power battery 04 are isolated.

In addition, when the short-circuit detection module in the power module sends a fault signal to the control circuit 2, the vehicle may be in a low-speed traveling state. In other words, the rotational speed of the drive motor 02 is low, and the generated counter electromotive force may be less than the input voltage of the inverter circuit 1. Therefore, another implementation of step S1 may be: In response to a current that passes through the upper bridge arm switching transistor 111 or the lower bridge arm switching transistor 112 of at least one phase bridge arm 11 in the three-phase bridge arms 11 being greater than the current threshold and the rotational speed of the drive motor 02 being greater than the preset rotational speed, the control circuit 2 controls the drive motor 02 to enter the safety protection state. The counter electromotive force generated by the drive motor 02 is positively correlated with the rotational speed of the drive motor 02. The preset rotational speed may be set according to the counter electromotive force generated by the drive motor 02. To be specific, when the rotational speed of the drive motor 02 is greater than the preset rotational speed, the counter electromotive force generated by the drive motor 02 is greater than the input voltage of the inverter circuit 1.

If responding to the current of the upper bridge arm switching transistor 111 or the lower bridge arm switching transistor 112 of the at least one phase bridge arm 11 in the three-phase bridge arms 11 being greater than the current threshold and the rotational speed of the drive motor 02 being less than or equal to the preset rotational speed, the control circuit 2 may directly control the upper bridge arm switching transistors 111 and the lower bridge arm switching transistors 112 of the three-phase bridge arms 11 to be both turned off, and step S3 is performed.

Step S2: In response to the control circuit controlling the drive motor 02 to be in the safety protection state for preset duration, the control circuit 2 controls the upper bridge arm switching transistors 111 and the lower bridge arm switching transistors 112 of the three-phase bridge arms 11 to be both turned off.

The preset duration may be preset by a skilled person. The control circuit 2 controls the drive motor 02 to enter the safety protection state. This indicates that the drive motor 02 has a high rotational speed and generates a large counter electromotive force. Therefore, after the vehicle slides for the preset duration and the rotational speed of the drive motor 02 decreases, the upper bridge arm switching transistors 111 and the lower bridge arm switching transistors 112 of the three-phase bridge arms 11 are controlled to be both turned off, to prevent components in the motor control unit 01 from being damaged by the counter electromotive force that is generated by the drive motor 02.

Alternatively, another implementation of step S2 may be: In response to the rotational speed of the drive motor 02 being less than or equal to the preset rotational speed, the control circuit 2 controls the upper bridge arm switching transistors 111 and the lower bridge arm switching transistors 112 of the three-phase bridge arms 11 to be both turned off.

Alternatively, another implementation of step S2 may be: In response to the counter electromotive force generated by the drive motor 02 being less than or equal to the input voltage of the inverter circuit 1, the control circuit 2 controls both the upper bridge arm switching transistors 111 and the lower bridge arm switching transistors 112 of the three-phase bridge arms 11 to be both turned off.

After the control circuit 2 controls the drive motor 02 to enter the safety protection state, the control circuit 2 may periodically detect the rotational speed of the drive motor 02 or the counter electromotive force generated by the drive motor 02; and after determining that the rotational speed of the drive motor 02 is less than or equal to the preset rotational speed or the counter electromotive force generated by the drive motor 02 is less than or equal to the input voltage of the inverter circuit 1, control the upper bridge arm switching transistors 111 and the lower bridge arm switching transistors 112 of the three-phase bridge arms 11 to be both turned off.

Step S3: In response to the current that passes through the upper bridge arm switching transistor 111 or the lower bridge arm switching transistor 112 of the at least one phase bridge arm 11 being greater than zero, the control circuit 2 controls the switch module 114 corresponding to the at least one phase bridge arm 11 to be turned off.

After the upper bridge arm switching transistors 111 and the lower bridge arm switching transistors 112 of the three-phase bridge arms 11 are controlled to be both turned off, if no bridge arm 11 has a short-circuit fault in the three-phase bridge arms 11, no current or no large current flows through the bridge arm middle point 113 of each phase bridge arm 11. Therefore, a module for detecting a magnitude of a current flowing through each bridge arm midpoint 113 may be disposed in the motor control unit 01. If a current flowing through any bridge arm midpoint 113 is detected or it is detected that the flowing current is greater than the preset threshold, it may be determined that there is indeed a short-circuit fault in a bridge arm 11 to which the bridge arm midpoint 113 belongs.

After the control circuit 2 re-determines that there is a bridge arm 11 with a short-circuit fault in the three-phase bridge arms 11, the switch module 114 connected to the bridge arm 11 with the short-circuit fault may be turned off, so that a short-circuit current of the bridge arm 11 with the short-circuit fault does not flow to the winding of the drive motor 02, thereby protecting the drive motor 02. The bridge arm midpoints 113 of the remaining two-phase bridge arms 11 can continue to output a two-phase alternating current to the winding of the drive motor 02, so that the drive motor 02 operates with a phase missing to avoid a complete loss of power of the vehicle equipped with the motor control unit 01, thereby improving safety of traveling of the vehicle.

The motor control unit 01 provided in this application may be configured to receive a torque signal sent by a vehicle control unit 05 of the vehicle, and control the drive motor 02 to output torque indicated by the torque signal.

In the process in which the inverter circuit 1 is configured to normally output the three-phase current to the drive motor 02 through the three-phase bridge arms 11, the control circuit 2 is specifically configured to: in response to the upper bridge arm switching transistor 111 or the lower bridge arm switching transistor 112 of one phase bridge arm 11 in the three-phase bridge arms 11 being short-circuited, control the switch module 114 corresponding to the at least one phase bridge arm 11 to be turned off; and in response to the switch module 114 corresponding to the phase bridge arm 11 being turned off, control the bridge arm midpoints 113 of the other two-phase bridge arms 11 to output a two-phase alternating current, where the two-phase alternating current is used to drive the drive motor 02 to output torque, and an average value of the torque output by the drive motor 02 driven by the two-phase alternating current is less than a torque value indicated by the torque signal.

In the motor control unit 01 provided in this application, after a short-circuit fault occurs in a bridge arm 11, the control circuit 2 may control the switch module 114 corresponding to the bridge arm 11 with the short-circuit fault to be turned off. Then the bridge arm midpoints 113 of the remaining two-phase bridge arms 11 are controlled to output the two-phase alternating current to the winding of the drive motor 02. The output two-phase alternating current may drive the drive motor 02 of the vehicle to output the torque, ensuring that the vehicle does not have a loss of power. The drive motor 02 that drives the vehicle changes from the three-phase alternating current to the two-phase alternating current, that is, a phase winding of the drive motor 02 cannot normally generate torque. Therefore, after the short-circuit fault occurs in the bridge arm 11 of the motor control unit 01, the average value of the torque output by the drive motor 02 driven by the motor control unit 01 is less than the torque value indicated by the torque signal.

In addition, to further ensure safe traveling of the vehicle, in a process in which the control circuit 2 controls the remaining bridge arms 11 that do not have a short circuit fault to output the two-phase alternating current to the drive motor 02, the control circuit 2 may control the rotational speed of the drive motor 02 to be less than a preset rotational speed value, thereby ensuring normal rotation of the drive motor 02 and preventing the drive motor 02 from being faulty. The preset rotational speed value may be set by a technician based on performance of the drive motor 02. When the rotational speed of the drive motor 02 is less than the preset rotational speed value, the drive motor 02 can be safely driven by the two-phase alternating current to output the torque to the vehicle.

In a process in which the motor control unit 01 provided in this application provides the two-phase alternating current for the drive motor 02, if a short-circuit fault occurs again in a bridge arm 11 in the remaining bridge arms 11 that do not have a short circuit fault, corresponding processing may include: The control circuit 2 is configured to control, in response to the upper bridge arm switching transistor 111 or the lower bridge arm switching transistor 112 of either bridge arm 11 in the two-phase bridge arms 11 being short-circuited, the drive motor 02 to enter a safety protection state.

During implementation, if a short-circuit fault occurs again in a bridge arm 11 in the remaining bridge arms 11 that do not have a short circuit fault, the drive motor 02 may be controlled again to enter the safety protection state. Processing through which the drive motor 02 is controlled again to enter the safety protection state may include the following cases.

In a case, it is determined that a short-circuit fault occurs again in a bridge arm 11 in the remaining two-phase bridge arms 11 that provide the two-phase alternating current to the drive motor 02, and it is determined that the upper bridge arm switching transistor 111 of the bridge arm 11 in which the short-circuit fault occurs again is short-circuited. Then, for the last bridge arm 11 that does not have a short circuit fault, the control circuit 2 controls the upper bridge arm switching transistor 111 to be turned on and the lower bridge arm switching transistor 112 to be turned off, so that the drive motor 02 enters the safety protection state.

In another case, it is determined that a short-circuit fault occurs again in a bridge arm 11 in the remaining two-phase bridge arms 11 that provide the two-phase alternating current to the drive motor 02, and it is determined that the lower bridge arm switching transistor 112 of the bridge arm 11 in which the short-circuit fault occurs again is short-circuited. Then, for the last bridge arm 11 that does not have a short circuit fault, the control circuit 2 controls the lower bridge arm switching transistor 112 to be turned on and the upper bridge arm switching transistor 111 to be turned off, so that the drive motor 02 enters the safety protection state.

In addition, if a short-circuit fault occurs again in a bridge arm 11 in the remaining bridge arms 11 that do not have a short circuit fault, in response to a current that passes through the upper bridge arm switching transistor 111 or the lower bridge arm switching transistor 112 of one phase bridge arm 11 in the two-phase bridge arms 11 being greater than the current threshold, the control circuit 2 controls the switch module 114 corresponding to the phase bridge arm 11 in the two-phase bridge arms 11 to be turned off.

In the process in which the inverter circuit 1 outputs the two-phase alternating current to the drive motor 02, if a short-circuit fault occurs again in one phase bridge arm 11 in the two-phase bridge arms 11 that output the two-phase alternating current, the switch module connected to the bridge arm 11 with the short-circuit fault may be controlled to be turned off, so that a short-circuit current of the phase bridge arm 11 does not flow to the winding of the drive motor 02, thereby protecting the drive motor 02.

An embodiment of this application further provides a powertrain 03. As shown in FIG. 4, the powertrain 03 includes the motor control unit 01 according to the foregoing embodiments and a drive motor 02. The motor control unit 01 is configured to output a three-phase alternating current to the drive motor 02, to drive the drive motor 02 to output torque.

The powertrain 03 includes a resolver sensor and a current sensor. The resolver sensor is configured to detect a rotational speed of the drive motor 02, and the current sensor is configured to detect a three-phase current value of the drive motor 02. The motor control unit 01 is configured to receive a rotational speed signal from the resolver sensor and a three-phase current signal from the current sensor. The rotational speed signal indicates the rotational speed of the drive motor 02, and the three-phase current signal indicates the three-phase current value of the drive motor 02.

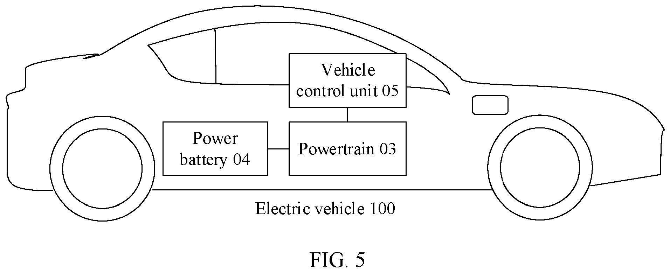

An embodiment of this application further provides an electric vehicle. As shown in FIG. 5, the electric vehicle includes a powertrain 03 shown in FIG. 4, a vehicle control unit 05, and a power battery 04. The power battery 04 may be configured to supply power to the powertrain 03, and the vehicle control unit 05 is configured to send a torque signal to the motor control unit 01.

In this application, the term "at least one" means one or more, and the term "a plurality of" means two or more.

The foregoing descriptions are merely specific implementations of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

## Claims

1. A motor control unit (01) having a short-circuit isolation function, wherein the motor control unit (01) comprises an inverter circuit (1) and a control circuit (2);
the inverter circuit (1) comprises three-phase bridge arms (11), wherein each phase bridge arm (11) comprises an upper bridge arm switching transistor (111) and a lower bridge arm switching transistor (112), and a bridge arm midpoint (113) of each phase bridge arm (11) is configured to connect to one phase winding of a drive motor (02) through a switch module (114);
the control circuit (2) is configured to:
control the switch module (114) corresponding to each phase bridge arm (11) to be turned on, and control the bridge arm midpoints (113) of the three-phase bridge arms (11) to output a three-phase current to three-phase windings of the drive motor (02); and
in a process in which the inverter circuit (1) is configured to output the three-phase current, the control circuit (2) is specifically configured to:
in response to the upper bridge arm switching transistor (111) or the lower bridge arm switching transistor (112) of at least one phase bridge arm (11) in the three-phase bridge arms (11) being short-circuited, control the switch module (114) corresponding to the at least one phase bridge arm (11) to be turned off.

2. The motor control unit (01) according to claim 1, wherein the motor control unit (01) comprises three drive circuits (3), each drive circuit (3) is configured to drive the upper bridge arm switching transistor (111) and the lower bridge arm switching transistor (112) of one phase bridge arm in the three-phase bridge arms, each drive circuit (3) is configured to receive power supplied by one power supply, and different drive circuits (3) are configured to receive power supplied by different power supplies.

3. The motor control unit (01) according to claim 2, wherein in the process in which the inverter circuit (1) is configured to output the three-phase current, the control circuit (2) is configured to:
in response to the upper bridge arm switching transistor (111) or the lower bridge arm switching transistor (112) of the at least one phase bridge arm (11) being short-circuited, control the power supply corresponding to the at least one phase bridge arm (11) to stop supplying power.

4. The motor control unit (01) according to claim 1, wherein in the process in which the inverter circuit (1) is configured to output the three-phase current, the control circuit (2) is configured to:
in response to the upper bridge arm switching transistor (111) or the lower bridge arm switching transistor (112) of the at least one phase bridge arm (11) being short-circuited, output a cut-off signal, wherein the cut-off signal is used to control the upper bridge arm switching transistor (111) and the lower bridge arm switching transistor (112) of the at least one phase bridge arm (11) to be turned off.

5. The motor control unit (01) according to claim 1, wherein in the process in which the inverter circuit (1) is configured to output the three-phase current, the control circuit (2) is configured to:
first control the upper bridge arm switching transistor (111) or the lower bridge arm switching transistor (112) that is not short-circuited in the at least one phase bridge arm (11) to be turned off, and then control the switch module (114) corresponding to the at least one phase bridge arm (11) to be turned off.

6. The motor control unit (01) according to claim 1, wherein in the process in which the inverter circuit (1) is configured to output the three-phase current, the control circuit (2) is specifically configured to:
in response to a current that passes through the upper bridge arm switching transistor (111) or the lower bridge arm switching transistor (112) of at least one phase bridge arm (11) in the three-phase bridge arms (11) being greater than a current threshold, control the switch module (114) corresponding to the at least one phase bridge arm (11) to be turned off.

7. The motor control unit (01) according to claim 1, wherein in the process in which the inverter circuit (1) is configured to output the three-phase current, the control circuit (2) is specifically configured to:
in response to a current that passes through the upper bridge arm switching transistor (111) or the lower bridge arm switching transistor (112) of at least one phase bridge arm (11) in the three-phase bridge arms (11) being greater than a current threshold, control the inverter circuit (1) to be in a safety protection state;
in response to the control circuit controlling the inverter circuit (1) to be in the safety protection state for preset duration, control the upper bridge arm switching transistors (111) and the lower bridge arm switching transistors (112) of the three-phase bridge arms (11) to be both turned off; and
in response to the current that passes through the upper bridge arm switching transistor (111) or the lower bridge arm switching transistor (112) of the at least one phase bridge arm (11) being greater than zero, control the switch module (114) corresponding to the at least one phase bridge arm (11) to be turned off, wherein
the safety protection state comprises an active short circuit ASC state or a switching pulse off SPO state.

8. The motor control unit (01) according to claim 1, wherein in the process in which the inverter circuit (1) is configured to output the three-phase current, the control circuit (2) is specifically configured to:
in response to a current that passes through the upper bridge arm switching transistor (111) or the lower bridge arm switching transistor (112) of at least one phase bridge arm (11) in the three-phase bridge arms (11) being greater than a current threshold and a rotational speed of the drive motor (02) being greater than a preset rotational speed, control the inverter circuit to be in a safety protection state;
in response to the control circuit controlling the inverter circuit to be in the safety protection state and the rotational speed of the drive motor (02) decreasing to a value less than or equal to the preset rotational speed, control the upper bridge arm switching transistor (111) and the lower bridge arm switching transistor (112) of each phase bridge arm in the three-phase bridge arms (11) to be both turned off; and
in response to the current that passes through the upper bridge arm switching transistor (111) or the lower bridge arm switching transistor (112) of the at least one phase bridge arm (11) being greater than zero, control the switch module (114) corresponding to the at least one phase bridge arm (11) to be turned off.

9. The motor control unit (01) according to claim 1, wherein the motor control unit (01) is configured to receive a torque signal and control the drive motor (02) to output torque indicated by the torque signal, and in the process in which the inverter circuit (1) is configured to output the three-phase current, the control circuit (2) is specifically configured to:
in response to the upper bridge arm switching transistor (111) or the lower bridge arm switching transistor (112) of one phase bridge arm (11) in the three-phase bridge arms (11) being short-circuited, control the switch module (114) corresponding to the at least one phase bridge arm (11) to be turned off; and
in response to the switch module (114) corresponding to the phase bridge arm (11) being turned off, control the bridge arm midpoints (113) of the other two-phase bridge arms (11) to output a two-phase alternating current, wherein the two-phase alternating current is used to drive the drive motor (02) to output torque, and an average value of the torque output by the drive motor (02) driven by the two-phase alternating current is less than a torque value indicated by the torque signal.

10. The motor control unit (01) according to claim 9, wherein in a process in which the inverter circuit (1) is configured to output the two-phase alternating current, the motor control unit (01) is configured to:
control a rotational speed of the drive motor (02) to be less than a preset rotational speed value.

11. The motor control unit (01) according to claim 9, wherein in a process in which the inverter circuit (1) is configured to output the two-phase alternating current, the control circuit (2) is configured to:
in response to the upper bridge arm switching transistor (111) or the lower bridge arm switching transistor (112) of either bridge arm (11) in the two-phase bridge arms (11) being short-circuited, control the inverter circuit to be in a safety protection state, wherein
the safety protection state comprises an active short circuit ASC state or a switching pulse off SPO state.

12. The motor control unit (01) according to claim 9, wherein in a process in which the inverter circuit (1) is configured to output the two-phase alternating current, the control circuit is configured to:
in response to a current that passes through the upper bridge arm switching transistor (111) or the lower bridge arm switching transistor (112) of one phase bridge arm (11) in the two-phase bridge arms (11) being greater than a current threshold, control the switch module (114) corresponding to the phase bridge arm (11) in the two-phase bridge arms (11) to be turned off and control the inverter circuit to be in a safety protection state, wherein
the safety protection state comprises an active short circuit ASC state or a switching pulse off SPO state.

13. A powertrain (03), wherein the powertrain (03) comprises the motor control unit (01) according to any one of claims 1 to 12 and a drive motor (02), and the motor control unit (01) is configured to receive a torque signal and control the drive motor (02) to output torque indicated by the torque signal.

14. The powertrain (03) according to claim 13, wherein the powertrain (03) comprises a resolver sensor and a current sensor, the resolver sensor is configured to detect a rotational speed of the drive motor (02), the current sensor is configured to detect a three-phase current value of the drive motor (02), and the motor control unit (01) is configured to receive a rotational speed signal from the resolver sensor and a three-phase current signal from the current sensor; and
the rotational speed signal indicates the rotational speed of the drive motor (02), and the three-phase current signal indicates the three-phase current value of the drive motor (02).

15. An electric vehicle (100), wherein the electric vehicle (100) comprises the powertrain (03) according to claim 13 or 14, a vehicle control unit (05), and a power battery (04), the power battery (04) is configured to supply power to the powertrain (03), and the vehicle control unit (05) is configured to send the torque signal to the motor control unit (01).
